# FASCICULE DE BREVET EUROPEEN

(11) **EP 1 087 475 B1**
(45) Date de publication et mention de la délivrance du brevet: **23.01.2008**
(21) Numéro de dépôt: 00402426.1
(22) Date de dépôt: 04.09.2000
(51) Int. Cl.: H01S 3/067

(54) **Amplificateur à fibre optique en bande L**
Faseroptischer L-Band-Verstärker
L-band optical fiber amplifier

(30) Priorité: 23.09.1999 FR 9911872
(43) Date de publication de la demande: 28.03.2001
(73) Titulaire: Alcatel Lucent, 75008 Paris (FR)
(72) Inventeur: Bayart, Dominique, 92140 Clamart (FR); Chesnoy, José, 75014 Paris (FR)
(74) Mandataire: Korakis-Ménager, Sophie

(56) Documents cités:
- MASSICOTT J F ET AL: "High gain, broadband, 1.6 mu m Er/sup 3+/ doped silica fibre amplifier" ELECTRONICS LETTERS, 27 SEPT. 1990, UK, vol. 26, no. 20, pages 1645-1646, XP000109503 ISSN: 0013-5194
- MASSICOTT J F ET AL: "Low noise operation of Er/sup 3+/ doped silica fibre amplifier around 1.6 mu m" ELECTRONICS LETTERS, 24 SEPT. 1992, UK, vol. 28, no. 20, pages 1924-1925, XP000315929 ISSN: 0013-5194
- JUHAN LEE ET AL: "Enhancement of power conversion efficiency for an L-band EDFA with a secondary pumping effect in the unpumped EDF section" IEEE PHOTONICS TECHNOLOGY LETTERS, JAN. 1999, IEEE, USA, vol. 11, no. 1, pages 42-44, XP000801384 ISSN: 1041-1135
- KARASEK M: "Gain enhancement in gain-shifted erbium-doped fiber amplifiers for WDM applications" IEEE PHOTONICS TECHNOLOGY LETTERS, SEPT. 1999, IEEE, USA, vol. 11, no. 9, pages 1111-1113, XP000882915 ISSN: 1041-1135
- PATENT ABSTRACTS OF JAPAN vol. 1998, no. 09, 31 juillet 1998 (1998-07-31) & JP 10 093174 A (MITSUBISHI CABLE IND LTD;NIPPON TELEGR & TELEPH CORP <NTT>), 10 avril 1998 (1998-04-10)

## Description

La présente invention concerne les amplificateurs à fibre optique.

De tels amplificateurs sont utilisés dans les systèmes de transmission à fibre optique pour compenser à intervalles réguliers la perte de ligne. Un amplificateur à fibre optique comprend une fibre dopée, par exemple à l'erbium et des moyens de pompage. L'inversion de population obtenue par le pompage permet l'amplification du signal.

On distingue dans les systèmes de transmission à fibre optique, et notamment dans les systèmes de transmission terrestres, diverses bandes. On appelle "bande C" la plage de longueur d'onde entre 1529 et 1565, et "bande L" la plage de longueur d'onde entre 1569 et 1603 nm.

Un problème lié à ce type d'amplificateur à fibre optique est celui du bruit. En effet, on constate une perte de puissance en raison de l'émission stimulée amplifiée (en anglais ASE: "amplified spontaneous emission"). Ce bruit se propage dans la fibre dans les deux sens. Le bruit d'émission spontanée amplifiée est émis notamment aux longueurs d'onde auxquelles la section efficace d'émission atteint son maximum (par exemple dans la fenêtre de 1,5 µm pour le cas d'une fibre dopée à l'erbium). Il est également d'autant plus élevé que l'inversion de population est importante. Ceci est en particulier le cas à l'extrémité de la fibre dopée adjacente aux moyens de pompage, où le taux de pompage est le plus élevé.

J.Massicott et al., Low noise opération of Er3+ doped silica fibre amplifier around 1,6 µm, Electron. Lett., 1992, 20, p. 1924-1925 propose d'utiliser un amplificateur à fibre dopée à l'erbium pour des signaux dans une bande de 1570 à 1605 nm. Cet article explique qu'une inversion de population de l'ordre de 60% est adaptée pour une utilisation de la fibre dopée à l'erbium comme amplificateur dans la bande centrée sur 1550 nm. En revanche, une inversion de population autour de 35% permet d'utiliser la fibre comme amplificateur dans la bande de 1570 à 1605 nm. Pour obtenir cette inversion de population, cet article propose deux pompes à deux longueurs d'onde différentes. La pompe principale à 1,48 µm présente une puissance de 82 mW et est utilisée pour l'obtention d'une forte inversion de population. La pompe auxiliaire à 1,555 µm présente une puissance de 1 mW et est utilisée afin de saturer l'amplificateur et de ramener l'inversion de population à 35%.

Y. Sun et al., 80 nm ultrawideband erbium-doped silica fibre amplifier, Electron. Lett., 1997, 23, p. 1965-1967 propose un amplificateur à fibre dopée à l'erbium, qui amplifie les signaux dans la bande C et dans la bande L. L'amplificateur présente une première section commune aux deux bandes, et une seconde section dans laquelle les signaux des deux bandes sont amplifiés séparément dans deux branches distinctes. Des circulateurs et des réseaux de Bragg à bande large intégrés dans la fibre et réfléchissant la bande C sont utilisés pour multiplexer et démultiplexer respectivement les deux bandes avant et après la seconde section. Dans la branche d'amplification pour la bande L, il est proposé d'utiliser deux étages d'amplification : le premier étage utilise une pompe à 980 nm avec une puissance de 20 dBm; le deuxième étage utilise une pompe à 980 nm avec une puissance de 25 dBm et un signal de saturation à 1592 nm, avec une puissance d'entrée du signal de saturation de l'ordre de -4 dBm.

J. Massicott et al., High gain, broadband 1,6 µm Er3+ doped silica fibre amplifier, Electron. Lett., 1990, 20, p. 1645-1646 propose d'amplifier des signaux autour de 1600 nm dans une fibre dopée, à l'aide d'un pompage à 1555 nm. La fibre proposée est une fibre à coeur SiO₂-Al₂O₃-GeO₂ d'un diamètre de 5,5 µm avec un Δn de 0,015. Une telle fibre présente en fait une longueur d'onde de coupure de l'ordre de 1200 nm.

Dans les amplificateurs de l'art antérieur fonctionnant dans la bande L se pose le problème d'optimisation du gain. Notamment, l'utilisation de pompes à 1480 ou 980 nm provoque une forte inversion de population dans la fibre dopée, au voisinage du coupleur d'injection de la pompe; on rencontre alors dans cette partie un fort gain; corrélativement, le bruit d'émission spontané amplifié est aussi important. Ceci conduit à des pertes d'énergie. Le réglage de la longueur de la fibre dopée permet d'abaisser l'inversion de population moyenne pour une utilisation dans la bande L, mais ne permet pas d'améliorer le rendement de l'amplificateur.

L'utilisation d'une pompe à 1550 nm dans la configuration proposée dans l'article de J. Massicott de 1990 pose aussi un problème de gestion du bruit et de confinement du signal et de la pompe dans le coeur de la fibre.

L'invention propose une solution à ces problèmes nouveaux. Elle propose un amplificateur en bande L, qui permet de limiter l'influence du bruit d'émission stimulée amplifiée. Elle propose aussi un système de transmission utilisant un tel amplificateur.

Plus précisément, l'invention propose un amplificateur optique en bande L, comprenant une fibre optique dopée présentant une longueur d'onde de coupure supérieure ou égale à 1535 nm et des moyens de couplage dans la fibre d'une pompe. Dans un mode de réalisation, cette pompe fournit une lumière dans la bande C à une longueur d'onde supérieure à la longueur d'onde de coupure de la fibre.

Avantageusement, la longueur d'onde de coupure de la fibre est supérieure à 1540 nm. Il est aussi possible que la pompe fournisse au moins 10% de l'énergie de pompage, et de préférence au moins 40% de cette énergie.

Dans un autre mode de réalisation, la pompe présente une puissance d'au moins 10 mW.

La pompe peut être une pompe co-directionnelle ou contra-directionnelle.

Dans encore un mode de réalisation, l'amplificateur présente des moyens de couplage dans la fibre d'une deuxième pompe fournissant une lumière à une longueur d'onde inférieure à celles de la bande C. On peut par exemple prévoir une deuxième pompe à une longueur d'onde de 980 ou 1480 nm.

L'invention propose aussi un système de transmission par fibre optique présentant un tel amplificateur et une source de signaux en bande L.

L'invention propose encore un procédé d'amplification optique d'un signal en bande L, comprenant l'injection du signal en bande L dans une fibre optique dopée présentant une longueur d'onde de coupure supérieure ou égale à 1535 nm, et le pompage du signal.

De préférence, le pompage est un pompage par une lumière dans la bande C à une longueur d'onde supérieure à la longueur d'onde de coupure de la fibre.

Avantageusement, la longueur d'onde de coupure de la fibre est supérieure à 1540 nm; on peut aussi prévoir que la lumière dans la bande C fournit au moins 10% de l'énergie de pompage, et de préférence au moins 40% de cette énergie.

Le pompage peut être un pompage co-directionnel ou un pompage contra-directionnel. -

Dans un autre mode de réalisation, l'invention propose un pompage par une deuxième lumière à une longueur d'onde inférieure à celles de la bande C. Celle-ci est par exemple une longueur d'onde de 980 ou 1480 nm.

D'autres caractéristiques et avantages de l'invention apparaîtront à la lecture de la description qui suit de modes de réalisation de l'invention, donnée à titre d'exemple et en référence aux dessins annexés, dont les figures montrent
- figure 1 une représentation schématique d'un amplificateur selon l'invention à pompe unique; et
- figure 2 une représentation schématique d'un amplificateur selon l'invention à pompe double.

L'invention propose d'utiliser une fibre dont la longueur d'onde de coupure est supérieure à 1535 nm. Elle propose aussi d'utiliser pour le pompage d'une fibre optique dopée une pompe dans la bande C, de sorte à amplifier les signaux dans la bande L.

L'utilisation d'une pompe dans la bande C permet d'obtenir les inversions de population nécessaires à une amplification dans la bande L, mais avec un gain plus faible dans la bande L, et de ce fait, un meilleur rendement de l'amplificateur. La longueur d'onde de coupure de la fibre permet à la fois de confiner dans le coeur de fibre la pompe et les signaux, et d'éviter le guidage dans la fibre du bruit d'émission stimulée amplifiée. L'invention permet de limiter l'accumulation de bruit d'émission stimulée amplifiée dans la bande C, d'améliorer le facteur de bruit de l'amplificateur, de simplifier les dispositifs de suppression du bruit.

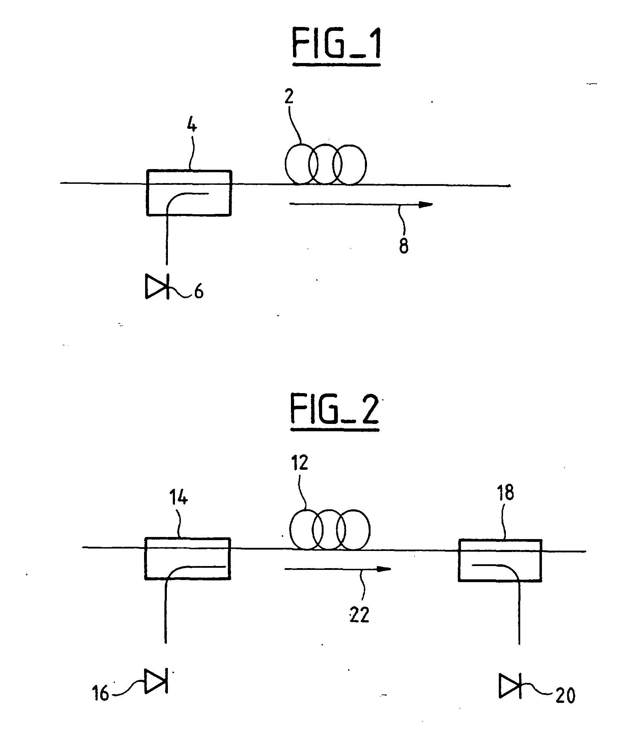

La figure 1 montre une représentation schématique d'un amplificateur selon l'invention à pompe unique; l'amplificateur présente une section 2 de fibre optique dopée, par exemple une fibre optique dopée à l'erbium. Cette fibre peut par exemple être une fibre à simple ou double coeur, avec un variation d'indice entre 5.10⁻³ et 30.10⁻³. Un dopage autour de 500 ppm massique dans le coeur d'une fibre en silice convient pour obtenir de telles caractéristiques. La fibre présente une longueur qui est typiquement comprise entre 10 et 100 m, ou de préférence entre 20 et 60 m. La longueur de la fibre est adaptée en fonction du gain souhaité, par un procédé parallèle de celui qui est utilisé pour adapter la longueur des fibres des amplificateurs optiques connus fonctionnant dans la bande C. La fibre présente une longueur d'onde de coupure qui est supérieure ou égale à 1535 nm, et qui de préférence est supérieure à 1540 nm. Cette longueur d'onde de coupure est déterminée de façon connue en soi, en mesurant la différence d"atténuation d'une source blanche injectée dans la fibre, entre une boucle d'un diamètre de 60 mm, et une boucle d'un diamètre de 280 mm.

Cette longueur d'onde est supérieure à la longueur d'onde du pic de fluorescence de la fibre - voisine de 1530 nm - autour duquel le bruit d'émission stimulée amplifiée présente une amplitude maximale. De la sorte, l'invention permet de limiter la propagation et l'amplification du bruit d'émission stimulée amplifiée. Par ailleurs, cette longueur d'onde de coupure élevée par rapport aux solutions classiques dans les amplificateurs connus en bande C permet de confiner dans le coeur de fibre la lumière de pompe comme le signal à amplifier. On améliore le rendement de l'amplificateur, les ions dopant la fibre se trouvant dans le coeur de fibre.

L'amplificateur présente un coupleur 4 d'injection de la lumière fournie par une pompe 6. Le coupleur peut être un coupleur d'un type connu en soi, et déjà largement utilisé dans les amplificateurs connus, de sorte qu'il n'est pas nécessaire de détailler sa structure.

Selon l'invention, la pompe fournit une lumière dans la bande C. On peut notamment utiliser une lumière autour de 1550 nm, qui peut être fournie par une source lumineuse d'un type qui est aussi connu en soi. On pourrait aussi utiliser une pompe à des longueurs d'ondes plus faibles, et par exemple autour de 1545 nm; il est clair que la pompe est de préférence à une longueur d'onde supérieure à la longueur d'onde de coupure de la fibre.

La flèche 8 sur la figure 1 montre la direction de propagation des signaux à amplifier; comme indiqué plus haut, ces signaux sont des signaux dans la bande L, présentant une longueur d'onde entre 1569 et 1603 nm. Dans l'exemple de la figure, la pompe est une pompe co-directionnelle ou co-propagative, qui est injectée dans la fibre dopée de sorte que sa lumière se propage dans la même direction que les signaux à amplifier.

La pompe pourrait aussi être une pompe contra-directionnelle, sans que ceci ne change le fonctionnement de l'amplificateur de l'invention. La puissance de pompe est de préférence supérieure ou égale à 10 mW; elle assure le pompage des signaux dans la bande L qui sont injectés dans l'amplificateur par l'extrémité de la fibre dopée voisine du coupleur.

La figure 2 montre une représentation schématique d'un amplificateur selon l'invention, qui présente deux pompes. Comme celui de la figure 1, l'amplificateur présente une section de fibre optique 12, qui est une fibre dopée à l'erbium. L'amplificateur présente à une extrémité de la section de fibre optique un premier coupleur 14, pour coupler dans la fibre dopée la lumière provenant d'une première pompe 16; il présente à l'autre extrémité de la section de fibre optique un deuxième coupleur 18, pour coupleur dans la fibre dopée la lumière provenant d'une deuxième pompe 20. Comme dans le mode de réalisation de la figure 1, les coupleurs sont réalisés avec des dispositifs connus en soi.

La flèche 22 indique le sens de propagation à travers l'amplificateur des signaux de la bande L qui sont injectés dans la fibre. On voit sur la figure que la lumière injectée depuis la première source est co-directionnelle, tandis que la lumière injectée depuis la deuxième source est contra-directionnelle.

Selon l'invention, l'une des deux sources fournit de la lumière dans la bande C, par exemple comme dans le cas de la figure 1 une lumière à 1550 nm; il peut s'agir dans l'exemple de la figure 2 de la source 20 contra-directionnelle. L'autre source fournit une lumière qui peut par exemple être une lumière de pompage à 980 nm ou 1480 nm. D'autres valeurs de pompes en dessous de la bande C sont possibles. De fait, bien que la pompe présente une longueur d'onde inférieure à la longueur d'onde de coupure, la pompe garde son caractère monomode transverse dans la fibre d'amplification, du fait de son absorption par la fibre, et des courtes longueurs de fibres utilisées dans l'amplification optique.

La pompe dans la bande C n'agit pas simplement comme un moyen d'assurer la saturation de l'amplificateur, mais apporte une partie de l'énergie de pompage; elle fournit au moins 10%, et de préférence plus de 40% de l'énergie de pompage. En termes d'énergie, la pompe dans la bande C présente avantageusement une puissance d'au moins 10 mW, soit 10 dBm.

On pourrait aussi modifier l'amplificateur de la figure 2, de sorte que les deux pompes utilisées se propagent toutes les deux dans la même direction; à cet effet, on pourrait utiliser un coupleur double pour injecteur les deux pompes, ou bien deux coupleurs décalés le long de la fibre. On pourrait aussi échanger les sens de propagation des pompes à 980 et 1550 nm.

Dans le cas de la figure 1 comme dans celui de la figure 2, la pompe dans la bande C permet d'atteindre l'inversion de population requise dans la bande L pour une amplification, mais avec une puissance de pompage requise plus faible que dans les amplificateurs de l'art antérieur. En conséquence, l'accumulation de bruit d'émission d'amplification spontanée dans la bande C est plus faible que dans les amplificateurs connus, du fait que le gain net est naturellement maintenu par la saturation de pompage en dessous des pertes d'absorption. Le pompage est plus homogène dans la bande L, ce qui améliore le facteur de bruit, ainsi que le rendement.

Ainsi, le rendement d'un amplificateur selon l'invention est de l'ordre de 50%, ce qui est à comparer aux valeurs de 40% du rendement des amplificateurs de l'art antérieur. Pour ce qui est du facteur de bruit, il est difficile de descendre en dessous de 4 dB dans les amplificateurs de l'art antérieur; l'invention permet de descendre à 3 dB dans le mode de réalisation avec une pompe à 980 nm.

L'invention propose ainsi un amplificateur en bande L, qui est en fait monobande : il n'est pas destiné à être utilisé pour amplifier conjointement avec les signaux de la bande L des signaux dans d'autres bandes.

Bien entendu, la présente invention n'est pas limitée aux exemples et modes de réalisation décrits et représentés, mais elle est susceptible de nombreuses variantes accessibles à l'homme de l'art. On pourrait dans le mode de réalisation de la figure 2 utiliser deux sections de fibre optique distinctes, pompées séparément par les deux pompes. On pourrait encore en lieu et place de fibre dopée à l'erbium, utiliser une fibre dopée avec d'autres terres rares.

Dans les modes de réalisation décrits, on a utilisé une pompe dans la bande C, et le cas échéant une pompe à une longueur d'onde inférieure. On peut aussi mettre en oeuvre l'invention avec simplement une pompe à une longueur d'onde inférieure à la longueur d'onde de coupure de la fibre d'amplification, et par exemple avec une pompe à 980 ou 1480 nm.

## Revendications

1. Un amplificateur optique en bande L, la bande L étant la plage de longueur d'onde entre 1569 et 1603 nm, comprenant une fibre optique dopée (2, 12) et des moyens de couplage (4, 18) dans la fibre d'une pompe (6, 20), **caractérisé en ce que** la fibre présente une longueur d'onde de coupure supérieure ou égale à 1535 nm.

2. L'amplification de la revendication 1, **caractérisé en ce que** la pompe fournit une lumière dans la bande C, la bande C étant la plage de longueur d'onde entre 1529 et 1565 nm, à une longueur d'onde supérieure à la longueur d'onde de coupure de la fibre.

3. L'amplificateur de la revendication 1 ou 2, **caractérisé en ce que** la longueur d'onde de coupure de la fibre est supérieure à 1540 nm.

4. L'amplificateur de la revendication 1, 2 ou 3, **caractérisé en ce que** la pompe fournit au moins 10% de l'énergie de pompage, et de préférence au moins 40% de cette énergie.

5. L'amplificateur de l'une des revendications 1 à 4, **caractérisé en ce que** la pompe présente une puissance d'au moins 10 mW.

6. L'amplificateur de l'une des revendications 1 à 5, **caractérisé en ce que** la pompe est une pompe co-directionnelle.

7. L'amplificateur de l'une des revendications 1 à 5, **caractérisé en ce que** la pompe est une pompe contra-directionnelle.

8. L'amplificateur de l'une des revendications 2 à 7, **caractérisé en ce qu'**il présente des moyens de couplage (14) dans la fibre d'une deuxième pompe (16) fournissant une lumière à une longueur d'onde inférieure à celles de la bande C.

9. L'amplificateur de la revendication 8, **caractérisé en ce que** la deuxième pompe présente une longueur d'onde de 980 ou 1480 nm.

10. Un procédé d'amplification optique d'un signal en bande L, la bande L étant la plage de longueur d'onde entre 1569 et 1603 nm, comprenant l'injection du signal en bande L dans une fibre optique dopée (2, 12) présentant une longueur d'onde de coupure supérieure ou égale à 1535 nm, et le pompage du signal.

11. Le procédé de la revendication 10, **caractérisé en ce que** le pompage est un pompage par une lumière dans la bande C, la bande C étant la plage de longueur d'onde entre 1529 et 1565 nm, à une longueur d'onde supérieure à la longueur d'onde de coupure de la fibre.

12. Le procédé de la revendication 10 ou 11, **caractérisé en ce que** la longueur d'onde de coupure de la fibre est supérieure à 1540 nm.

13. Le procédé de la revendication 11 ou 12, **caractérisé en ce que** la lumière dans la bande C fournit au moins 10% de l'énergie de pompage, et de préférence au moins 40% de cette énergie.

14. Le procédé de l'une des revendications 10 à 13, **caractérisé en ce que** le pompage est un pompage co-directionnel.

15. Le procédé de l'une des revendications 10 à 13, **caractérisé en ce que** le pompage est un pompage contra-directionnel.

16. Le procédé de l'une des revendications 11 à 13, **caractérisé par** un pompage par une deuxième lumière à une longueur d'onde inférieure à celles de la bande C.

17. Le procédé de la revendication 16, **caractérisé en ce que** la deuxième lumière présente une longueur d'onde de 980 ou 1480 nm.

18. Un système de transmission par fibre optique présentant un amplificateur selon l'une des revendications 1 à 9, et une source de signaux en bande L.

## Claims

1. L-band optical amplifier, the L-band having a wavelength range between 1 569 and 1 603 nm, including a doped optical fibre (2.12), **characterised in that** the fibre has a cut-off wavelength not less than 1 535 nm and means (4,18) for coupling a pump (6,20) into the fibre.

2. Amplifier according to claim 1 , **characterised in that** the pump supplies light in the C-band, the C-band having a wavelength range between 1 529 and 1 565 nm, at a wavelength greater than the cut-off wavelength of the fibre.

3. Amplifier according to claim 1 or 2, **characterised in that** the cut-off wavelength of the fibre is greater than 1 540 nm.

4. Amplifier according to claim 1, 2 or 3, **characterised in that** the pump provides at least 10% of the pumping energy and preferably at least 40% of the pumping energy.

5. Amplifier according to any of claims 1 to 4 , **characterised in that** the pump has a power rating of at least 10 mW.

6. Amplifier according to any of claims 1 to 5, **characterised in that** the pump is a co-directional pump.

7. Amplifier according to any of claims 1 to 5 , **characterised in that** the pump is a contra-dirrectional pump.

8. Amplifier according to any of claims 2 to 7, **characterised in that** it further includes means (14) for coupling into the fibre a second pump (16) supplying light at a wavelength less than the wavelengths of the C-band.

9. Amplifier according to claim 8 , **characterised in that** the second pump has a wavelength of 980 nm or 1 480 nm.

10. Optical method of amplifying an L-band signal, the L-band having a wavelength range between 1 569 and 1 603 nm, including injecting the L-band signal into a doped optical fibre (2,12) having a cut-off wavelength not less than 1 535 nm and pumping the signal.

11. Method according to claim 10 , **characterised in that** the pumping involves pumping with light in the C-band, the C-band having a wavelength range between 1 529 and 1 565 nm, at a wavelength greater than the cut-off wavelength of the fibre.

12. Method according to claim 10 or 11, **characterised in that** the cut-off wavelength of the fibre, is greater than 1 540 nm.

13. Method according to claim 11 or 12, **characterised in that** the light in the C-band supplies at least 10% of the pumping energy and preferably at least 40% of the pumping energy.

14. Method according to any of claims 10 to 13, **characterised in that** the pumping is co-directional pumping.

15. Method according to any of claims 10 to 13, **characterised in that** the pumping is contra-directional pumping.

16. Method according to any of claims 11 to 13, **characterised by** pumping with a second light at a wavelength less than the wavelengths of the C-band.

17. Method according to claim 16, **characterised in that** the second light has a wavelength of 980 nm or 1 480 nm.

18. Optical fibre transmission system including an amplifier in accordance with any of claims 1 to 9, and a source of L-band signal

## Patentansprüche

1. Ein optischer L-Band-Verstarker, wobei das L-Band in einem Wellenlängenbereich zwischen 1569 und 1603 nm liegt, der eine dotierte optische Faser (2, 12) und Kopplungsvorrichtungen (4, 18) in der Pumpfaser (6, 20) umfasst, **dadurch gekennzeichnet, dass** die Faser eine Grenzwellenlänge über oder gleich 1535 nm aufweist.

2. Der Verstärker aus Anspruch 1 , **dadurch gekennzeichnet, dass** die Pumpe Licht mit einer Wellenlänge über der Grenzwellenlänge der Faser im C-Band liefert, wobei das C-Band in einem Wellenlängenbereich zwischen 1529 und 1565 um liegt.

3. Der Verstärker aus Anspruch 1 oder 2, **dadurch gekennzeichnet, dass** die Grenzwellenlänge der Faser über 1540 nm liegt.

4. Der Verstärker aus Anspruch 1, 2 oder 3, **dadurch gekennzeichnet, dass** die Pumpe mindestens 10 % der Pumpenergie liefert, und vorzugsweise mindestens 40 % dieser Energie.

5. Der Verstärker gemäß einem der Ansprüche 1 bis 4 , **dadurch gekennzeichnet, dass** die Pumpe eine Leistung von mindestens 10 mW aufweist.

6. Der Verstärker gemäß einem der Ansprüche 1 bis 5, **dadurch gekennzeichnet, dass** es sich bei der Pumpe um eine kodirektionale Pumpe handelt.

7. Der Verstärker gemäß einem der Ansprüche 1 bis 5, **dadurch gekennzeichnet, dass** es sich bei der Pumpe um eine kontradirektionale Pumpe handelt.

8. Der Verstärker gemäß einem der Ansprüche 2 bis 7, **dadurch gekennzeichnet, dass** er Kopplungsvorrichtungen (14) für eine zweite Pumpe (16) in der Faser aufweist, die Licht mit einer Wellenlänge unter der Wellenlänge im C-Band liefert.

9. Der Verstärker aus Anspruch 8, **dadurch gekennzeichnet, dass** die zweite Pumpe eine Wellenlänge von 980 oder 1480 nm aufweist.

10. Ein optisches Verstarkungsverfahren für ein L-Band-signal, wobei das L-Band in einem Mellenlängenbereich zwischen 1569 und 1603 nm liegt, das die Injektion des Signals im L-Band in eine dotierte optische Faser (2, 12) mit einer Grenzwellenlänge über oder gleich 1535 nm sowie das Pumpen des Signals umfasst.

11. Das Verfahren aus Anspruch 10, **dadurch gekennzeichnet, dass** es sich bei dem Pumpvorgang um das Pumpen von Licht mit einer Wellenlänge über der Grenzwellenlänge der Faser im C-Band handelt, wobei das C-Band in einem Wellenlängenbereich zwischen 1529 und 1565 nm liegt

12. Das. Verfahren aus Anspruch 10 oder 11, **dadurch gekennzeichnet, dass** die Grenzwellenlänge der Faser über 1540 nm liegt.

13. Das Verfahren aus Anspruch 11 oder 12, **dadurch gekennzeichnet, dass** das Licht im C-Band mindestens 10 % der Pumpenergie liefert, und vorzugsweise mindestens 40 % dieser Energie.

14. Das Verfahren gemäß einem der Ansprüche 10 bis 13, **dadurch gekennzeichnet, dass** es sich bei dem Pumpvorgang um kedirektionales Pumpen handelt.

15. Das Verfahren gemäß einem der Ansprüche 10 bis 13, **dadurch gekennzeichnet, dass** es sich bei dem Pumpvorgang um kontradirektionales Pumpen handelt.

16. Das Verfahren gemäß einem der Ansprüche 11 bis 13, **gekennzeichnet durch** einen pumpvorgang mit einem zweiten Licht, mit einer Wellenlänge, die unterhalb des C-Bands liegt,

17. Das Verfahren aus Anspruch 16, **dadurch gekennzeichnet, dass** das zweite Licht eine Wellenlänge von 980 oder 1480 nm aufweist.

18. Ein faseroptisches Übertragungssystem, das einen Verstärker gemäß einem der Ansprüche 1 bis 9 und eine Signalquelle im L-Band ausweist.
